# FASCICULE DE BREVET EUROPEEN

(11) **EP 2 523 291 B1**
(45) Date de publication et mention de la délivrance du brevet: **21.06.2017**
(21) Numéro de dépôt: 12305158.3
(22) Date de dépôt: 13.02.2012
(51) Int. Cl.: H02G 15/34

(54) **Elément de dérivation destiné à une unité de câble supraconducteur**
Abzweigelement für eine Supraleiterkabeleinheit
Branching element for a superconductor cable unit

(30) Priorité: 11.05.2011 FR 1154077
(43) Date de publication de la demande: 14.11.2012
(73) Titulaire: Nexans, 75008 Paris (FR)
(72) Inventeur: Lallouet, Nicolas, 62132 FIENNES (FR); Delplace, Sébastien, 59279 LOON-PLAGE (FR)
(74) Mandataire: Lenne, Laurence

(56) Documents cités:
- EP-A1- 1 732 190
- WO-A1-03/103094
- WO-A2-2008/113366
- DE-A1-102004 034 494
- GOUGE M J ET AL: "High-temperature superconducting tri-axial power cable", PHYSICA C, NORTH-HOLLAND PUBLISHING, AMSTERDAM, NL, vol. 392-396, 1 octobre 2003 (2003-10-01), pages 1180-1185, XP004455073, ISSN: 0921-4534, DOI: 10.1016/S0921-4534(03)00788-3

## Description

L'invention concerne un élément de dérivation destiné à une unité de câble supraconducteur, pour moyenne ou haute tension.

Un câble supraconducteur peut comprendre, autour d'un axe longitudinal et à l'intérieur d'une enveloppe thermique contenant un fluide réfrigérant, un noyau central support qui peut être tubulaire et contenir également un fluide réfrigérant et sur lequel sont disposées de façon concentrique des couches supraconductrices de la phase n°1 à la phase n°N dans le cas d'un câble multiphasé, en général triphasé, et finalement une couche d'écran d'un conducteur neutre. Entre chaque couche supraconductrice est disposée une couche diélectrique.

A l'extrémité d'un câble supraconducteur, le courant et la tension doivent être transmis à partir d'une partie à la température cryogénique vers une partie à la température ambiante. Cette transition doit être concue de façon à ne pas transmettre une importante quantité de chaleur par conduction thermique et ne pas générer de pertes importantes par effet Joule lors du passage du courant électrique. Elle doit également ne pas engendrer de claquage électrique avec les parties connectées à la terre ou à une autre phase. Il est donc nécessaire de gerer tout à la fois le gradient thermique, les effets du courant et le champ électrique.

Classiquement, une traversée électrique d'une certaine longueur, de l'ordre d'un mètre ou même plus, pourvue éventuellement d'un dispositif spécifique de contrôle du champ électrique est montée à cette extrémité de câble.

Le document de brevet DE 10 2004 034 494 décrit un élément de dérivation pourvu d'un élément de connexion électrique à une traversée assurant la gestion du champ électrique. De par sa longueur, cette traversée assure également la gestion du gradient thermique entre la température du fluide réfrigérant, dans lequel se trouve l'élément de dérivation, et la température ambiante à l'extrémité libre de la traversée. Le document de brevet WO 03/103094 décrit un élément de dérivation comportant l'ensemble des caractéristiques du préambule de la revendication 1. L'objet de l'invention est de proposer un élément de dérivation pourvu d'un élément de connexion électrique qui puisse assurer directement la gestion du gradient thermique entre la température du fluide réfrigérant dans laquelle se trouve un câble supraconducteur et la température ambiante, tout en assurant le passage du courant de ce câble vers l'élément de connexion électrique, sans nécessité d'une longue traversée de gestion du champ électrique.

Grâce à l'invention, l'unité de câble supraconducteur, qui peut être une unité de terminaison ou de jonction, est de constitution particulièrement simple, économique, compacte et peu encombrante. Pour ce faire, l'invention propose un élément de dérivation comportant l'ensemble des caractéristiques de la revendication 1. Selon un mode de réalisation préféré, ledit plateau est un disque circulaire.

Avantageusement, ledit plateau comporte N dites fentes en forme de portion de cercle de même centre et de diamètre différent, les extrémités d'une n^{ième} fente et les extrémités d'une (n+1)^{ième} fente étant disposées de part et d'autre dudit centre

De préférence, ledit plateau est pourvu d'orifices de passage dudit fluide réfrigérant.

Ledit plateau peut comporter une bague interne destinée à être raccordée électriquement audit câble.

De préférence, ladite bague interne est pourvue desdits orifices de passage dudit fluide réfrigérant

Ladite bague interne peut être pourvue à sa périphérie d'éléments conducteurs électriques déformables qui la connecte électriquement à une bague externe portant ledit élément de connexion électrique.

Lesdits éléments conducteurs électriques déformables peuvent être des lamelles multi-contacts.

Ladite bague interne peut être constituée de deux bagues concentriques connectées par des lamelles multi-contacts.

L'invention concerne également une unité de câble supraconducteur comprenant une enveloppe externe d'isolation thermique et électrique contenant ledit câble supraconducteur et comportant au moins un élément de dérivation selon l'une des revendications précédentes.

Selon un mode dé réalisation préféré, ledit câble est contenu dans une enveloppe interne contenant ledit fluide réfrigérant.

De préférence, ledit élément de dérivation est porté par au moins ladite enveloppe externe.

De préférence, ladite enveloppe interne est en matériau isolant thermique et électrique.

Une mousse isolante thermique peut être disposée entre lesdites enveloppes internes et externes.

Avantageusement, seul ledit élément de connexion électrique fait saillie de ladite enveloppe externe.

L'invention est décrite ci-après plus en détail à l'aide de figures ne représentant que des modes de réalisation préférés de l'invention.
La figure 1 est une vue frontale d'un élément de dérivation conforme à l'invention, selon un premier mode de réalisation.
La figure 2 est une vue frontale d'un élément de dérivation conforme à l'invention, selon un second mode de réalisation.
La figure 3 est une vue en perspective d'une unité de terminaison d'un câble triphasé conforme à l'invention.
La figure 4 est une vue en perspective et en coupe longitudinale der cette unité de terminaison.
La figure 5 est une vue de détail en perspective et en coupe longitudinale de cette unité de terminaison.
La figure 6 est une vue en coupe longitudinale d'une unité de terminaison d'un câble monophasé conforme à l'invention.
La figure 7 est une vue en coupe longitudinale d'une unité de jonction de câbles monophasés conforme à l'invention.

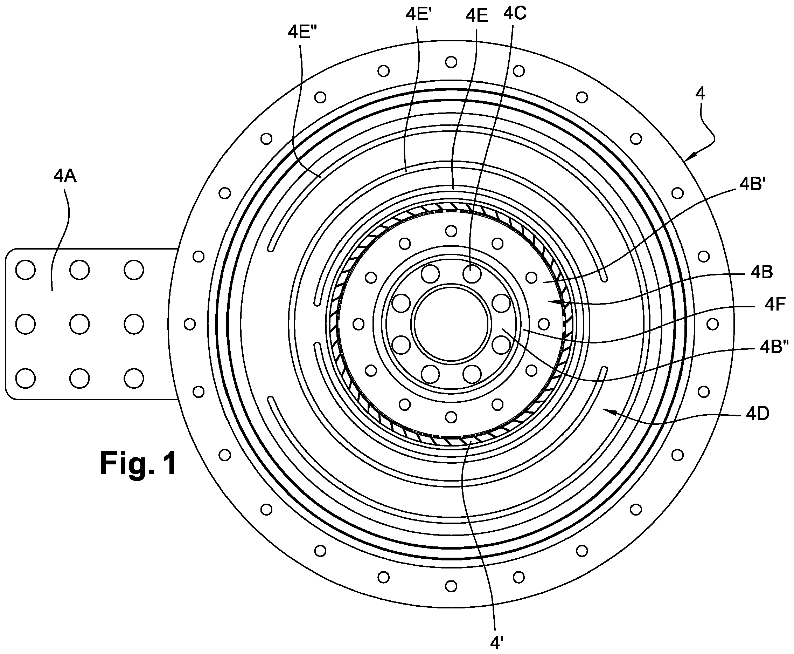

Comme représenté sur la figure 1, selon un premier mode de réalisation, un élément de dérivation 4 pourvu d'un élément de connexion électrique 4A, de type cosse, et destiné à une unité de câble supraconducteur disposé dans un fluide réfrigérant, comporte un plateau conducteur électrique destiné à être porté mécaniquement par l'unité et à être raccordée électriquement au câble.

Ce plateau est un disque circulaire métallique, par exemple en cuivre, et comporte des fentes traversantes 4E, 4E' et 4E" destinées à former des chicanes de conduction thermique, afin de minimiser la conduction thermique entre l'extérieur et l'intérieur, tout en assurant le passage du courant électrique.

Ces chicanes engendrent également une division du courant par deux. On a alors un effet de résistance électrique en parallèle et, à puissance thermique équivalente par effet Joule, chaque chicane peut présenter une section divisée par deux, comme la moitié du courant la parcourt. On peut donc dans un espace donné avoir une plus longue trajectoire du courant et donc mieux gérer le gradient thermique par conduction.

Le plateau comporte au moins deux dites fentes en forme de portion de cercle de même centre et de diamètre différent, les extrémités d'une première fente et les extrémités d'une seconde fente étant disposées de part et d'autre du centre. L'angle au centre de chaque portion de cercle est supérieur à 270 degrés.

Selon l'exemple représenté, le plateau comporte trois fentes mais, de façon plus générale, il peut comporter N dites fentes en forme de portion de cercle de même centre et de diamètre différent, les extrémités d'une n^{ième} fente et les extrémités d'une (n+1)^{ième} fente étant disposées de part et d'autre du centre. Il est ainsi réalisé un système de chicanes très stable mécaniquement.

Le nombre et les dimensions de ces chicanes sont optimisés par calcul et/ou modélisation selon les dimensions de l'unité et du courant.

Le plateau est pourvu d'orifices 4C destiné au passage du fluide réfrigérant.

Selon ce mode de réalisation, le plateau comporte une bague interne centrale 4B destiné à être raccordée électriquement au câble, par exemple au moyen de multi-contacts. Cette bague interne 4B est pourvue des orifices de passage 4C du fluide réfrigérant.

Cette bague interne 4B est pourvue à sa périphérie d'éléments conducteurs électriques déformables, qui sont des lamelles multi-contacts 4', et qui la connecte électriquement à une bague externe 4D périphérique portant l'élément de connexion électrique 4A. Ces éléments déformables permettent d'assurer la conduction électrique tout en absorbant les déformations de contraction engendrées par la température du fluide réfrigérant.

Cette bague externe 4D comporte les fentes traversantes 4E, 4E' et 4E".

Pour des raisons de montage mécanique, la bague interne 4B est de préférence elle-même constituée de deux bagues concentriques 4B' et 4B" connectées par des lamelles multi-contacts 4F.

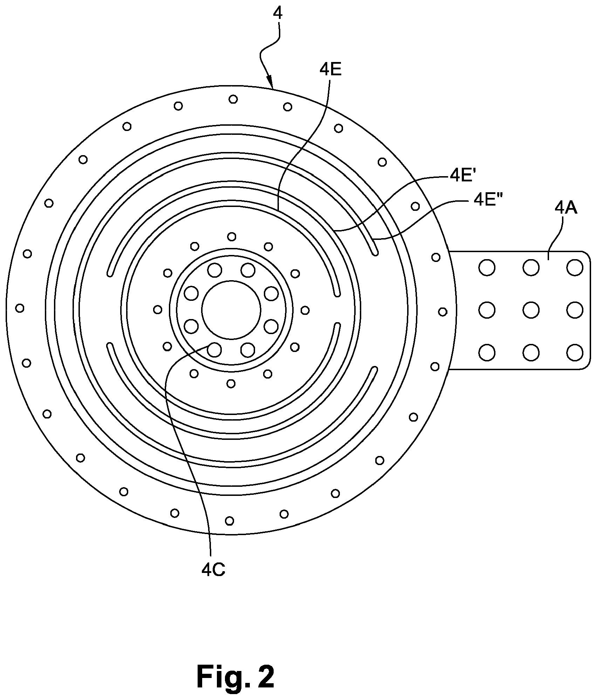

Comme représenté sur la figure 2, selon un second mode de réalisation, le plateau peut être monobloc, sans bague interne et sans bague externe. A part cette différence, l'élément de dérivation 4 représenté sur la figure 2 est identique au précédent.

L'invention concerne également une unité de câble supraconducteur comprenant une enveloppe externe d'isolation thermique contenant ledit câble supraconducteur et comportant au moins un élément de dérivation tel que précédemment décrit.

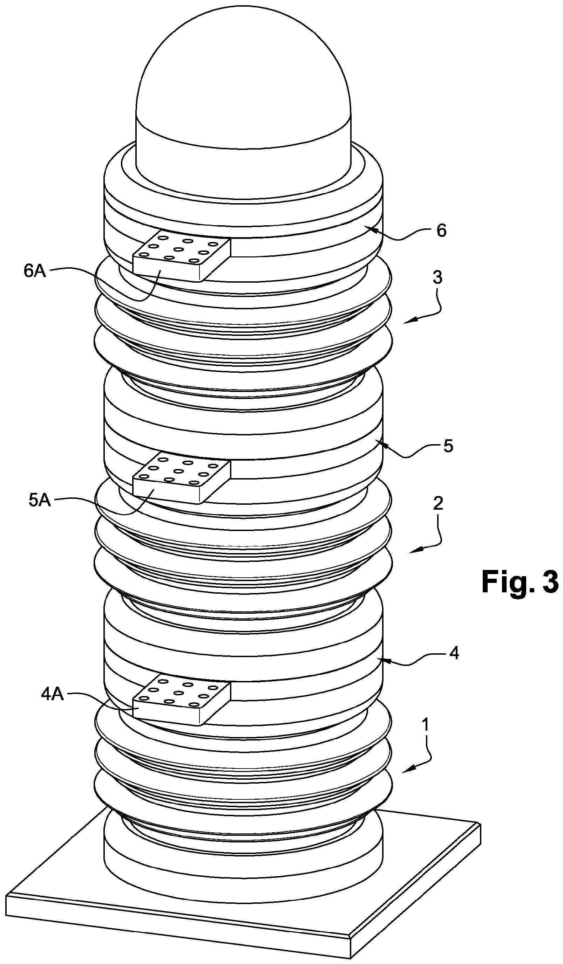

Un premier exemple d'unité est représenté sur les figures 3 à 5.

Cette unité est une unité de terminaison pour câble supraconducteur multiphasé et comporte pour chaque phase un élément modulaire cylindrique 1, 2, 3, comprenant une enveloppe externe d'isolation thermique en matériau diélectrique, par exemple en époxy renforcé de fibres avec des ailettes en silicone et pourvue d'une bride d'extrémité métallique, par exemple en aluminium, cette enveloppe contenant un tronçon de câble supraconducteur contenu dans une enveloppe interne constitué d'un matériau diélectrique contenant un fluide réfrigérant.

Un élément de dérivation de chaque phase 4, 5, 6 conforme au premier mode de réalisation précédemment décrit et pourvu d'un élément de connexion électrique 4A, 5A, 6A, de type cosse, est disposé à l'extrémité de chaque élément modulaire 1, 2, 3, seul cet élément de connexion électrique 4A, 5A, 6A faisant saillie des éléments modulaires 1,2,3.

Eléments modulaires et éléments de dérivation peuvent être superposés comme illustré sur la figure 3 et la terminaison peut être verticale ou éléments modulaires et éléments de dérivation peuvent être juxtaposés l'un à côté de l'autre et la terminaison peut être horizontale.

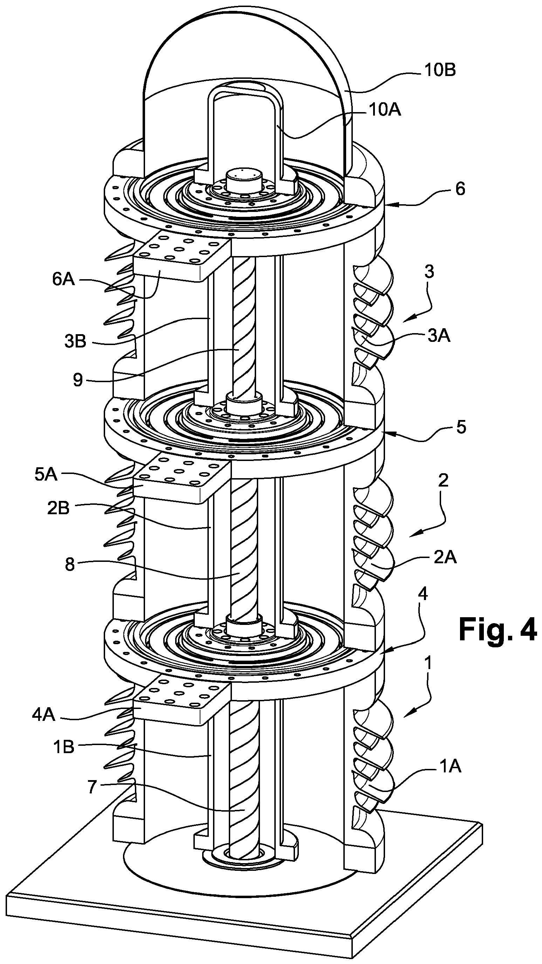

Comme visible sur la figure 4, chaque élément modulaire cylindrique 1, 2, 3 comprend donc une enveloppe externe d'isolation thermique et électrique 1A, 2A, 3A contenant un tronçon de câble supraconducteur 7, 8, 9 contenu dans une enveloppe interne 1B, 2B, 3B contenant un fluide réfrigérant, par exemple de l'azote liquide.

Les enveloppes internes 1B, 2B, 3B sont en matériau diélectrique et de préférence en matériau isolant thermique, de préférence en polymère, par exemple en laminé de tissu de verre continu dans une résine époxy, connu sous l'appellation « G10 », et une mousse isolante thermique peut être disposée entre les enveloppes internes 1B, 2B, 3B et externes 1A, 2A, 3A, par exemple de la mousse de verre ou de polyisocianurate expansé.

En variante, un vide de niveau inférieur à 10⁻¹ millibars est réalisé entre les enveloppes internes et externes 1A, 2A, 3A, 1B, 2B, 3B.

L'élément de dérivation supérieur 6 correspondant à la troisième phase est surmonté par un capot interne 10A contenant le fluide réfrigérant et par un capot externe 10B, qui peuvent être métalliques par exemple en aluminium.

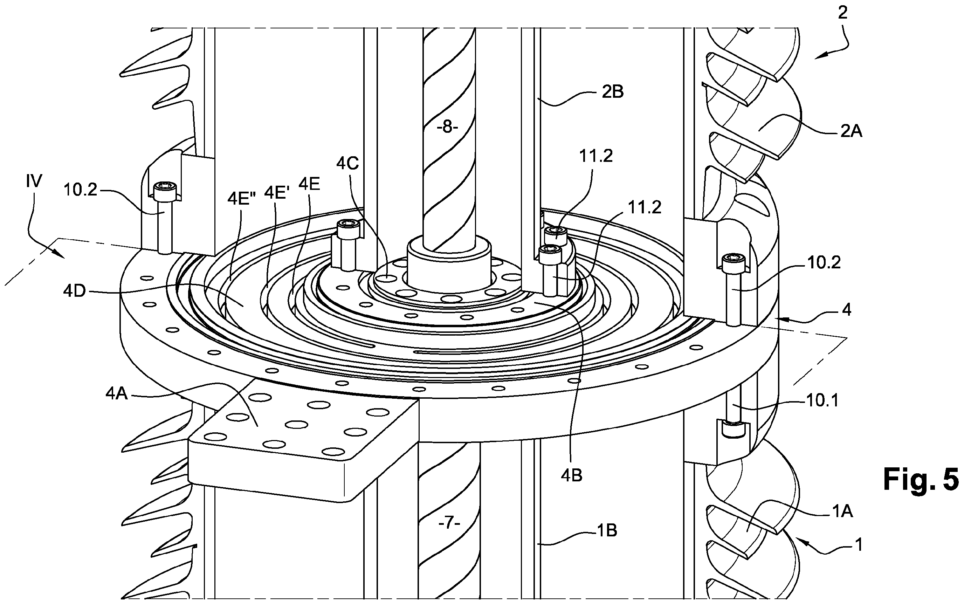

Comme particulièrement visible sur la figure 5, chaque élément de dérivation, par exemple 4, est constitué d'un plateau conducteur électrique, par exemple en cuivre ou en aluminium, porté mécaniquement par les enveloppes adjacentes externes 1A, 2A des éléments modulaires adjacents, au moyen de vis 10.1, 10.2 traversant une bride correspondante des enveloppes ainsi que le plateau, et par les enveloppes adjacentes internes 1B, 2B des éléments modulaires adjacents au moyen de vis 11.1, 11.2 traversant une bride correspondante des enveloppes ainsi que le plateau.

Bien que non représentés sur les figures, les brides d'interface entre éléments modulaires et éléments de dérivation et pourvues des vis 10.1, 10.2, 11.1 et 11.2 sont pourvus de joints d'étanchéité.

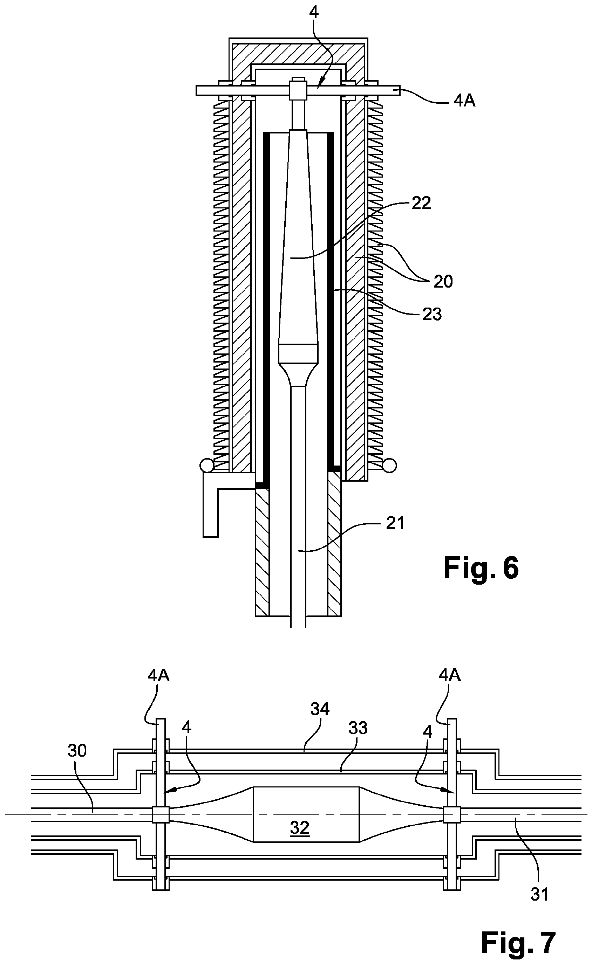

Un deuxième exemple d'unité est représenté sur la figure 6. Cette unité est une unité de terminaison pour câble supraconducteur monophasé.

Cette unité de terminaison comporte une enveloppe externe d'isolation thermique 20 pourvue d'ailettes radiales contenant un câble supraconducteur 21 pourvu d'un dispositif de contrôle du champ électrique 22, qui peut être une borne condensateur. Un tube en matériau isolant électrique 23 sert à l'amenée du fluide réfrigérant à l'intérieur de l'enveloppe externe 20.

Une unité de terminaison de ce type est décrite dans le document de brevet EP 2 383 854.

Grâce à l'invention, il est réalisé une dérivation particulièrement peu encombrante à l'extrémité de cette unité de terminaison, seul l'élément de connexion électrique 4A faisant saillie de l'enveloppe externe 20.

Un élément de dérivation 4 selon le premier ou le second mode de réalisation précédemment décrit est monté sur l'extrémité libre du câble 21. Cet élément de dérivation est porté par l'enveloppe externe 20 de l'unité et connecté électriquement au câble 21.

Un troisième exemple d'unité est représenté sur la figure 7. Cette unité est une unité de jonction de câbles supraconducteurs monophasés.

Deux câbles 30, 31 sont connectés par un agencement de connexion 32. Câbles et agencement de connexion sont contenus dans une enveloppe interne 33 contenant un fluide réfrigérant et l'unité comprend une enveloppe externe 34 d'isolation thermique.

Au moins un élément de dérivation 4 selon le premier ou le second mode de réalisation précédemment décrit et destiné à une mise à la terre est monté sur une extrémité d'un des câbles 30, 31. Cet élément de dérivation 4 est porté par l'enveloppe externe 34 et par l'enveloppe interne 33 et connecté électriquement au câble correspondant 30,31.

Comme précisément illustré, l'unité de jonction peut comporter un élément de dérivation 4 sur chaque câble 30, 31, l'écran de terre étant pourvu sur l'agencement de connexion 32 ou non.

Grâce à l'invention, il est obtenu un élément de dérivation particulièrement peu encombrante à l'extrémité de cette unité de jonction, seul l'élément de connexion électrique 4A faisant saillie de l'enveloppe externe 20.

L'enveloppe interne 33 est en matériau isolant thermique et une mousse isolante thermique est disposée entre les enveloppes internes et externes 33, 34.

## Revendications

1. Elément de dérivation (4) pourvu d'un élément de connexion électrique (4A) et destiné à une unité de câble supraconducteur disposé dans un fluide réfrigérant, comportant un élément conducteur électrique destiné à être porté mécaniquement par ladite unité et à être raccordée électriquement audit câble, ledit élément conducteur électrique étant un plateau comportant des fentes traversantes (4E, 4E', 4E") destinées à former des chicanes de conduction thermique, **caractérisé en ce que** ledit plateau comporte au moins deux dites fentes (4E, 4E', 4E") en forme de portion de cercle de même centre et de diamètre différent, les extrémités d'une première fente et les extrémités d'une seconde fente étant disposées de part et d'autre dudit centre et **en ce que** l'angle au centre de chaque portion de cercle est supérieur à 270 degrés.

2. Elément de dérivation selon la revendication précédente, **caractérisé en ce que** ledit plateau est un disque circulaire.

3. Elément de dérivation selon la revendication 1 ou 2, **caractérisé en ce que** ledit plateau comporte N dites fentes (4E, 4E', 4E") en forme de portion de cercle de même centre et de diamètre différent, les extrémités d'une n^{ième} fente et les extrémités d'une (n+1)^{ième} fente étant disposées de part et d'autre dudit centre.

4. Elément de dérivation selon l'une des revendications précédentes, **caractérisé en ce que** ledit plateau est pourvu d'orifices de passage (4C) dudit fluide réfrigérant.

5. Elément de dérivation selon l'une des revendications précédentes, **caractérisé en ce que** ledit plateau comporte une bague interne (4B) destinée à être raccordée électriquement audit câble.

6. Elément de dérivation selon la revendication précédente, **caractérisé en ce que** ladite bague interne est pourvue d'orifices de passage (4C) dudit fluide réfrigérant.

7. Elément de dérivation selon la revendication 5 ou 6, **caractérisée en ce que** ladite bague interne (4B) est pourvue à sa périphérie d'éléments conducteurs électriques déformables (4') qui la connecte électriquement à une bague externe (4D) portant ledit élément de connexion électrique (4A).

8. Elément de dérivation selon la revendication précédente, **caractérisée en ce que** lesdits éléments conducteurs électriques déformables sont des lamelles multi-contacts (4').

9. Elément de dérivation selon l'une des revendications précédentes, **caractérisée en ce que** ladite bague interne (4B) est constituée de deux bagues concentriques (4B', 4B") connectées par des lamelles multi-contacts.

## Patentansprüche

1. Abzweigelement (4), ausgestattet mit einem elektrischen Anschlusselement (4A) und für eine supraleitende Kabeleinheit bestimmt, angeordnet in einem Kühlfluid, aufweisend eine elektrisch leitendes Element, das bestimmt ist, mechanisch von der Einheit getragen und elektrisch mit dem Kabel verbunden zu sein, wobei das elektrisch leitende Element eine Platte ist, die Durchgangsschlitze (4E, 4E', 4E") aufweist, die bestimmt sind, Wärmeleitschikanen zu bilden, **dadurch gekennzeichnet, dass** die Platte mindestens zwei der Schlitze (4E, 4E', 4E") in Kreisabschnittform mit demselben Zentrum und unterschiedlichem Durchmesser aufweist, wobei die Enden eines ersten Schlitzes und die Enden eines zweiten Schlitzes beiderseits des Zentrums angeordnet sind und dass der Winkel im Zentrum jedes Kreisabschnitts größer als 270 Grad ist.

2. Abzweigelement nach vorangehendem Anspruch, **dadurch gekennzeichnet, dass** die Platte eine kreisförmige Scheibe ist.

3. Abzweigelement nach vorangehendem Anspruch, **dadurch gekennzeichnet, dass** die Platte N Schlitze (4E, 4E', 4E") in Kreisabschnittform mit demselben Zentrum und unterschiedlichem Durchmesser aufweist, wobei die Enden eines n-ten Schlitzes und die Enden eines (n+1)-ten Schlitzes beiderseits des Zentrums angeordnet sind.

4. Abzweigelement nach einem der vorangehenden Ansprüche, **dadurch gekennzeichnet, dass** die Platte mit Durchgangsöffnungen (4C) des Kühlfluids ausgestattet ist.

5. Abzweigelement nach einem der vorangehenden Ansprüche, **dadurch gekennzeichnet, dass** die Platte einen Innenring (4B) aufweist, der bestimmt ist, mit dem Kabel elektrisch verbunden zu sein.

6. Abzweigelement nach vorangehendem Anspruch, **dadurch gekennzeichnet, dass** der Innenring mit Durchgangsöffnungen (4C) des Kühlfluids ausgestattet ist.

7. Abzweigelement nach Anspruch 5 oder 6, **dadurch gekennzeichnet, dass** der Innenring (4B) auf seinem Umfang mit verformbaren elektrisch leitenden Elementen (4') ausgestattet ist, die ihn mit einem Außenring (4D) elektrisch verbinden, der das elektrische Anschlusselement (4A) trägt.

8. Abzweigelement nach vorangehendem Anspruch, **dadurch gekennzeichnet, dass** die verformbaren elektrisch leitenden Elemente Multikontaktlamellen (4') sind.

9. Abzweigelement nach einem der vorangehenden Ansprüche, **dadurch gekennzeichnet, dass** der Innenring (4B) von zwei konzentrischen Ringen (4B', 4B") gebildet ist, die mit Multikontaktlamellen verbunden sind.

## Claims

1. A bypass element (4) provided with an electrical connection element (4A) and intended for a superconducting cable unit positioned in a refrigerant, including an electrical conductor element intended to be mechanically supported by said unit and to be electrically connected to said cable, said electrical conductor element being a plate including transverse slits (4E, 4E', 4E") intended to form heat conducting baffles, **characterized in that** said plate includes at least two said slits (4E, 4E', 4E") in the form of circle portions with a same center and different diameters, the ends of a first slit and the ends of a second slit being positioned on either side of said center, and **in that** the angle at the center of each circle portion is greater than 270 degrees.

2. The bypass element according to the preceding claim, **characterized in that** said plate is a circular disc.

3. The bypass element according to claim 1 or 2, **characterized in that** said plate includes N said slits (4E, 4E', 4E") in the form of circle portions with a same center and different diameters, the ends of a n^{th} slit and the ends of a (n+1)^{th} slit being positioned on either side of said center.

4. The bypass element according to one of the preceding claims, **characterized in that** said plate is provided with passage orifices (4C) for said refrigerant.

5. The bypass element according to one of the preceding claims, **characterized in that** said plate includes an inner ring (4B) intended to be electrically connected to said cable.

6. The bypass element according to the preceding claim, **characterized in that** said inner ring is provided with passage orifices (4C) for said refrigerant.

7. The bypass element according to claim 5 or 6, **characterized in that** said inner ring (4B) is provided on its periphery with deformable electrically conducting elements (4') that electrically connect it to an outer ring (4D) bearing said electrical connection element (4A).

8. The bypass element according to the preceding claim, **characterized in that** said deformable electrically conducting elements are multi-contact blades (4').

9. The bypass element according to one of the preceding claims, **characterized in that** said inner ring (4B) is made up of two concentric rings (4B', 4B") connected by multi-contact blades.
